# DEMANDE DE BREVET EUROPEEN

(11) **EP 3 028 567 A1**
(43) Date de publication de la demande: **08.06.2016**
(21) Numéro de dépôt: 15197379.9
(22) Date de dépôt: 01.12.2015
(51) Int. Cl.: A01M 7/00

(54) **DISPOSITIF DE PULVÉRISATION À RAMPE**

(30) Priorité: 01.12.2014 FR 1461727
(71) Demandeur: Jardin & Agriculture Developpement, 33700 Merignac (FR)
(72) Inventeur: PETIT, Yannick, 33750 CUBNEZAIS (FR)
(74) Mandataire: Aquinov

(57) **Abrégé**

L'objet de l'invention est un dispositif de pulvérisation à rampe (16), comprenant un châssis (10) muni d'un arbre (14) rotatif débouchant sous ledit châssis (10) dans l'espace de travail confiné par des moyens (26) de confinement, caractérisé en ce que l'arbre (14) porte une rampe (16) munie de deux têtes (18-1, 18-2) de pulvérisation.

## Description

La présente invention concerne un dispositif de pulvérisation à rampe.

La description qui va suivre est effectuée pour une application en viticulture mais elle trouverait application pour tout type de cultures notamment développées en rangs.

Durant le cycle de culture, les exploitants sont conduits à traiter les végétaux pour lutter contre certaines maladies ou pour éradiquer de façon sélective certaines variétés de plantes. C'est le cas notamment pour le traitement du sol, et notamment le désherbage.

Les produits ont évolué et ne présentent plus la toxicité passée mais ils n'en restent pas moins qu'il s'agit de produits à effets puissants qu'il convient de ne pas disséminer et surtout il convient de ne pas appliquer de ce produit sur les plants cultivés par exemple lorsqu'il s'agit de désherbant, ce qui affecterait bien sûr l'intégrité dudit plant.

Les règles sanitaires et le bon sens écologique obligent à protéger l'opérateur qui assure la mission de pulvérisation d'une part et l'environnement d'autre part.

A cet effet, la pulvérisation nécessite un ciblage de l'action et simultanément un dosage approprié sur la zone ciblée.

Une autre contrainte est également la couverture de la surface traitée car le diamètre des gouttelettes est important et leur répartition aussi.

Le cas des désherbants systémiques est particulièrement exemplifiant.

Si les gouttelettes sont de faible diamètre et surtout présentent une répartition adaptée, l'efficacité sera grandement améliorée et nécessitera un volume moindre de produit pour un résultat plus exhaustif.

Cet objectif est relativement complexe et difficile à atteindre du fait que l'application ne s'effectue pas en laboratoire mais en plein champ avec les contraintes associées.

C'est ainsi que la surface du sol par exemple n'est pas rigoureusement plane bien entendu. La culture en rangs par exemple montre la présence d'obstacles tels que les plants et éventuellement les palissages associés.

Les conditions atmosphériques sont également une contrainte et notamment le vent, si bien qu'il faut protéger la pulvérisation afin que les gouttelettes ne se dispersent pas dans l'atmosphère et sur les endroits non souhaités.

Le milieu agricole nécessite aussi une construction qui reste simple afin de conférer au dispositif la fiabilité nécessaire pour pouvoir agir, or les fenêtres météorologiques sont rares et il faut pouvoir agir sans risque de panne.

Au pire, si une panne arrivait, il faut que le dispositif soit vite réparé.

Une autre contrainte est également la vitesse de travail, car les fenêtres météorologiques étant étroites ainsi qu'indiqué, il faut pouvoir agir vite mais en même temps si la vitesse augmente il faut pouvoir distribuer des volumes importants sans pour autant sacrifier à la bonne répartition, sans manque de diffusion car il n'est prévu qu'un passage donc l'exhaustivité de traitement de la surface est un impératif.

On connaît des dispositifs de pulvérisation, notamment la demande internationale de brevet WO 93/16589, dans laquelle il est décrit des moyens de pulvérisation portés par un engin motorisé. Ces moyens de pulvérisation comprennent une buse centrale rotative à axe de rotation vertical et une jupe périphérique déformable.

La pulvérisation est obtenue par projection du liquide de traitement par une buse sur un disque rotatif.

Un tel dispositif est une base mais la distribution mono buse est limitée et la répartition n'est pas homogène car elle provient du déplacement en translation d'une projection unique annulaire. Les mouvements du terrain notamment conduisent nécessairement à des manques ou pour le moins à des dosages variables.

Enfin, la vitesse de travail est limitée du fait que le débit ne peut être que limité du fait de la buse unique.

Le dispositif selon la présente invention permet de pallier ces problèmes en proposant un dispositif à fort débit donc autorisant une vitesse de travail élevée, des moyens de pulvérisation croisée de façon à assurer une homogénéité de couverture de la zone de travail même à vitesse élevée. Le dispositif selon la présente invention permet aussi de pulvériser des liquides à forte viscosité.

Le dispositif selon la présente invention est maintenant décrit en détail suivant un mode de réalisation particulier, non limitatif, les dessins annexés permettant d'exemplifier ledit dispositif et les figures de ces dessins montrent :
- Figure 1, une vue extérieure du dispositif et ses moyens de fixation sur une machine agricole, en l'absence de la jupe périphérique,
- Figure 2: une vue en perspective du dispositif selon la présente invention,
- Figure 3 : une vue en élévation latérale du dispositif selon la présente invention, en l'absence de la jupe périphérique de façon à montrer l'angulation des buses,
- Figure 4 : une vue de détail d'une buse,
- Figure 5 : une vue du schéma de projection croisée des buses.

Le dispositif est décrit en regard des différentes figures indifféremment.

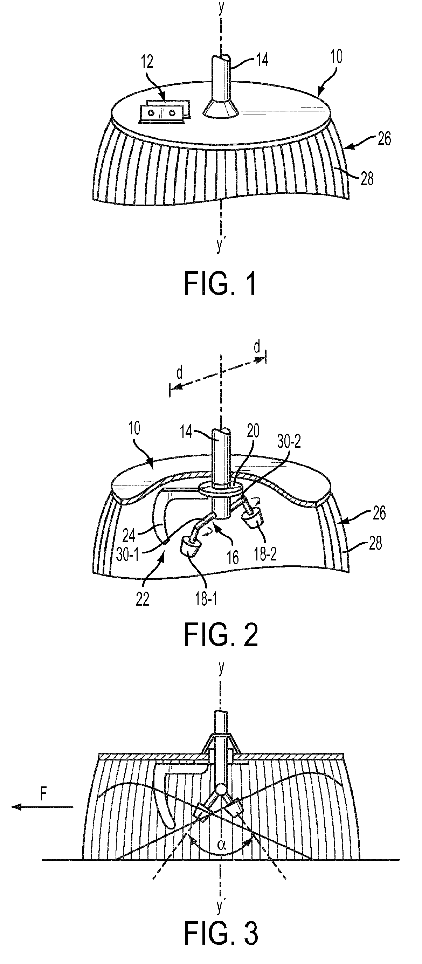

Sur la figure 1, on a représenté un dispositif de pulvérisation à rampes selon l'invention comprenant un châssis 10 en forme de disque, avec des moyens 12 de fixation sur un bras de manoeuvre d'une machine agricole, non représentée.

Ce châssis 10 comporte un arbre 14 disposé en position centrale par rapport au châssis 10. Cet arbre 14 porte à son extrémité une rampe 16 avec deux têtes 18-1 et 18-2 de pulvérisation.

Un palier 20, avec possibilité de blocage en orientation, permet le montage de l'arbre 14 par rapport au châssis.

Des moyens 22 de protection mécanique de la rampe 16 sont également ménagés et supportés par le châssis 10. Ces moyens 22 de protection mécanique comprennent un ergot 24, disposé en amont par rapport au sens de déplacement montré par la flèche F, la forme permettant le passage de la rampe 16 en cas de rotation.

En complément du dispositif de pulvérisation à rampe, il est prévu des moyens 26 de confinement de la pulvérisation à l'intérieur et de protection de la pulvérisation vis-à-vis des turbulences extérieures. Ces moyens de confinement permettent de ménager un espace de travail confiné, sous le châssis. Ces moyens 26 de confinement sont en l'occurrence constitués d'une crinière 28 périphérique comportant des fibres fines, multiples, susceptibles d'épouser la forme du terrain, les obstacles et de ne pas laisser diffuser les produits pulvérisés.

La rampe plus particulièrement détaillée sur les figures 2, 3 et 4 comprend deux bras 30-1, 30-2 permettant de disposer chacune des têtes 18-1, 18-2 à une distance radiale d de l'axe YY' de rotation pour un châssis d'un diamètre D. Les valeurs dépendent de la machine agricole qui porte le châssis, du type d'exploitation, du produit, des dimensions de la zone traitée.

La rampe a son axe longitudinal disposé perpendiculairement à la direction d'avancement symbolisée par la flèche F.

Les têtes 18-1, 18-2 sont constituées chacune d'un disque 32 tournant et d'une buse 34 à débit contrôlé.

Cette buse 34 est orientée vers la partie annulaire disponible du disque 32 tournant. La pression de distribution est de 2 bars pour donner un ordre de grandeur.

Toujours pour donner un ordre d'idée, le disque 32 tourne à une vitesse comprise entre 3500 et 4500 tours/min et les gouttes générées sont comprises entre 300 et 1200 µm.

De façon avantageuse, selon l'invention, le disque 32 porte des cannelures de façon à assurer une meilleure projection et possède un bord franc de façon à libérer les gouttelettes sans retenue.

Le disque 32 tournant est également conique avec une conicité orientée vers la zone de projection c'est-à-dire le sommet du cône orienté vers le haut.

Selon une caractéristique particulière de la présente invention, l'axe ZZ' de rotation de chaque disque 32 tournant donc de chaque tête 18-1, 18-2, est incliné.

L'inclinaison α/2, comme montré sur la figure 3, est ménagée dans deux plans perpendiculaires au plan contenant l'arbre 14 et la rampe 16. L'inclinaison est ménagée dans un sens, les sens des aiguilles d'une montre pour la première tête 18-1, et dans le sens contraire des aiguilles d'une montre pour la seconde tête 18-2.

En l'occurrence, l'angle α est de 8°.

Chacune des têtes projette des gouttelettes sur une zone de dispersion ayant la forme d'un disque et comme les disques sont inclinés, l'intersection de ces disques avec le sol conduit à une zone de répartition suivant deux ellipses avec une intersection entre ces deux ellipses, assurant ainsi un recouvrement central et une couverture de la surface au droit de chaque tête. Les dispositifs de l'art antérieur voyaient la surface située au droit de chaque tête défavorisé, dès lors que la projection est obtenue par effet centrifuge.

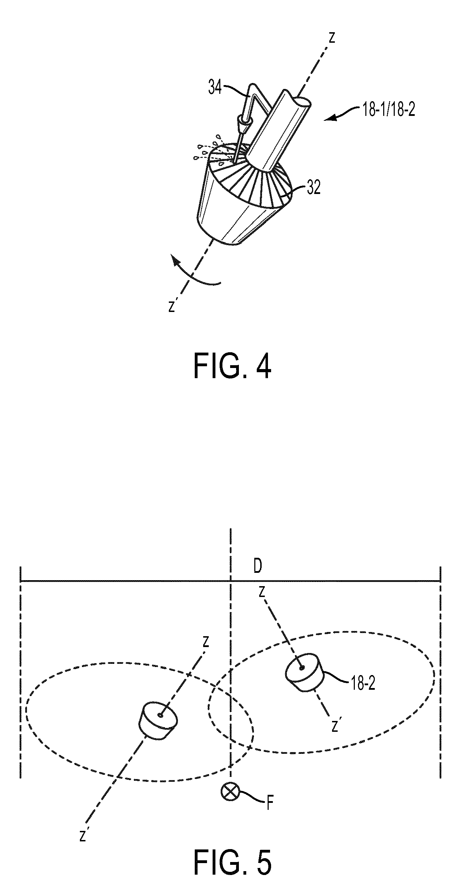

La répartition liée au dispositif selon la présente invention est représentée sur la figure 5.

## Revendications

1. Dispositif de pulvérisation à rampe (16), comprenant un châssis (10) muni d'un arbre (14) rotatif débouchant sous ledit châssis (10) dans l'espace de travail confiné par rapport au sol par des moyens (26) de confinement, **caractérisé en ce que** l'arbre (14) porte une rampe (16) munie de deux têtes (18-1, 18-2) de pulvérisation, lesdites têtes (18-1, 18-2) comprenant chacune un disque (32) tournant et une buse (34) à débit contrôlé, ladite buse (34) étant orientée vers la partie annulaire disponible du disque (32) tournant.

2. Dispositif de pulvérisation à rampe (16), selon la revendication 1, **caractérisé en ce que** les deux têtes (18-1, 18-2) ont leur axe ZZ' de rotation incliné.

3. Dispositif de pulvérisation à rampe (16), selon la revendication 1 ou 2, **caractérisé en ce que** les axes ZZ' de chaque tête (18-1, 18-2) sont inclinés dans deux plans perpendiculaires au plan contenant l'arbre (14) et la rampe (16) d'une valeur α/2.

4. Dispositif de pulvérisation à rampe (16), selon la revendication 3, **caractérisé en ce que** l'inclinaison d'une valeur α/2 est ménagée dans un sens pour une tête et dans l'autre sens pour la seconde tête.

5. Dispositif de pulvérisation à rampe (16), selon l'une quelconque des revendications précédentes, **caractérisé en ce que** le disque (32) porte des cannelures et un bord franc.

6. Dispositif de pulvérisation à rampe (16), selon l'une quelconque des revendications précédentes, **caractérisé en ce que** le disque (32) tournant est conique avec une conicité orientée vers la zone de projection.

7. Dispositif de pulvérisation à rampe (16), selon l'une quelconque des revendications précédentes, **caractérisé en ce que** la pression de distribution de la buse (34) est de 2 bars et la vitesse de rotation du disque (32) tournant est comprise entre 3500 et 4500 tours/min.

8. Dispositif de pulvérisation à rampe (16), selon l'une quelconque des revendications précédentes, **caractérisé en ce qu'**il comprend des moyens (22) de protection mécanique de la rampe (16) ménagés et supportés par le châssis (10), sous forme d'un ergot (24), disposé en amont par rapport au sens de déplacement.
